Europäisches Patentamt

European Patent Office

Office européen des brevets

(11) Publication number: **0 022 577**
**B1**

# (12) EUROPEAN PATENT SPECIFICATION

(45) Date of publication of patent specification: **09.01.85**

(21) Application number: **80104027.0**

(22) Date of filing: **11.07.80**

(51) Int. Cl.⁴: **H 05 B 6/64**

(54) Cooking vessel for microwave oven.

(30) Priority: **13.07.79 JP 88760/79**

(43) Date of publication of application:
**21.01.81 Bulletin 81/03**

(45) Publication of the grant of the patent:
**09.01.85 Bulletin 85/02**

(84) Designated Contracting States:
**DE FR GB IT NL**

(56) References cited:
**US-A-1 586 335**
**US-A-3 941 967**
**US-A-4 133 996**
**US-A-4 156 806**
**US-A-4 158 760**

(73) Proprietor: **Kabushiki Kaisha Toshiba**
**72, Horikawa-cho Saiwai-ku**
**Kawasaki-shi Kanagawa-ken 210 (JP)**

(72) Inventor: **Ishikawa, Teruo**
**774-14, Habuna Shibakawa-cho**
**Fuji-gun Shizuoka-ken (JP)**

(74) Representative: **Patentanwälte Henkel,**
**Pfenning, Feiler, Hänzel & Meinig**
**Möhlstrasse 37**
**D-8000 München 80 (DE)**

## Description

This invention relates to a cooking vessel for microwave oven used in preparing popcorn by means of a microwave oven.

With the spread of microwave oven, there have increasingly been used cooking vessels for cooking various foods by high frequency heating. As a typical example of such vessel, there is a vessel which contains kernels of corn or maize to be heated by dielectric heating in a microwave oven to prepare popcorn or popped maize. Such prior art vessel for popcorn is designed in combination with the microwave oven used therewith so that the bottom portion of the vessel may be heated intensively. That is, since the microwave oven has specific high-frequency distribution therein based on the design specifications, such as location of magnetron, the microwave oven and the vessel are designed in consideration of such high-frequency distribution so that the bottom portion of the vessel may be located in a position where the high-frequency density is high. Thus, the vessel of this type can be used only with specified microwave ovens. With such specified microwave ovens, moreover, the location of the vessel therein would have to be accurate.

Accordingly, the object of this invention is to provide a cooking vessel for a microwave oven capable of preparing popcorn (popped maize) by efficiently heating a material to be heated or kernels of corn (maize) without being affected by the high-frequency distribution of the microwave oven of the location of the vessel in the oven.

This invention can be more fully understood from the following detailed description when taken in conjunction with the accompanying drawings, in which:

Figs. 1 to 3 show a cooking vessel according to an embodiment of this invention, in which:

Fig. 1 is a general perspective view;

Fig. 2 is a partial sectional view; and

Fig. 3 is a schematic diagram showing how the cooking vessel is heated in a microwave oven.

Figs. 4 to 15 show cooking vessels according to various alternative embodiments of the invention.

Now there will be described preferred embodiments of this invention with reference to the accompanying drawings.

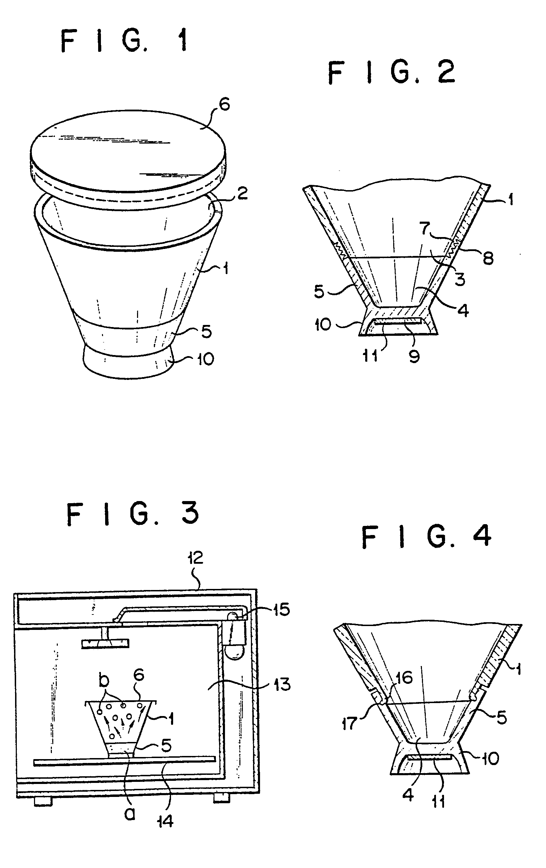

Referring now to Figs. 1 to 3 showing a first embodiment, numeral 1 designates a vessel body substantially in the shape of an inverted truncated cone and having upper and lower openings 2 and 3. The lower opening 3 is solidly coupled by such means as is mentioned later with a heating vessel 5 in the shape of an inverted truncated cone defining a heating chamber 4. The upper opening 2 of the vessel body 1 is fitted with a removable cover 6. The vessel body 1 and cover 6 are formed of a transparent high frequency transmitting material, such as e.g. heat-resisting glass or heat-resisting plastic material. An external thread 7 is formed on the outer surface of the peripheral wall of the vessel body 1 defining the opening 3. The heating vessel 5 is formed of a heat-resisting material, such as ceramic, and a mating internal thread 8 for the external thread 7 is formed on the upper edge of the peripheral wall of the heating vessel 5 defining the heating chamber 4. Further, a support seat 10 formed of an annular ridge or rim surrounding an under flat surface 9 of the vessel 5 is solidly formed on the bottom of the heating vessel 5. The outer under surface 9 is provided with a layer or film of high-frequency absorbing material 11, such as ferrite or tin oxide.

Now there will be described a method of preparing popcorn (popped maize) by using the cooking vessel of the aforementioned structure. First, when the cover 6 is removed and kernels of corn a, along with some quantity of edible oil and salt, are put into the cooking vessel through the opening 2, the kernels a collect in the heating chamber 4 of the vessel 5. Then, the cover 6 is fitted on the opening 2, and the cooking vessel is set on a platform 14 in a high-frequency heating chamber 13 of a microwave oven 12, as shown in Fig. 3. In this state, when the timer of the microwave oven 12 is set and high-frequency is generated from a high-frequency generator 15, the high-frequency is absorbed by the high-frequency absorbing material 11 and the kernels of corn a. Thus, in a given period of time (3 to 5 minutes), the kernels a are heated and popped to expand and jump up, and unpopped kernels a at the superficial portion of the vessel gradually fall into the heating chamber 4 along the sloping inner peripheral surface of the vessel body 1 and also popped successively. Finally, the vessel body 1 is filled up with popped corn or finished popcorn b, and thus cooking is completed. Since the vessel body 1 is transparent, the advance of the popping process can be observed externally.

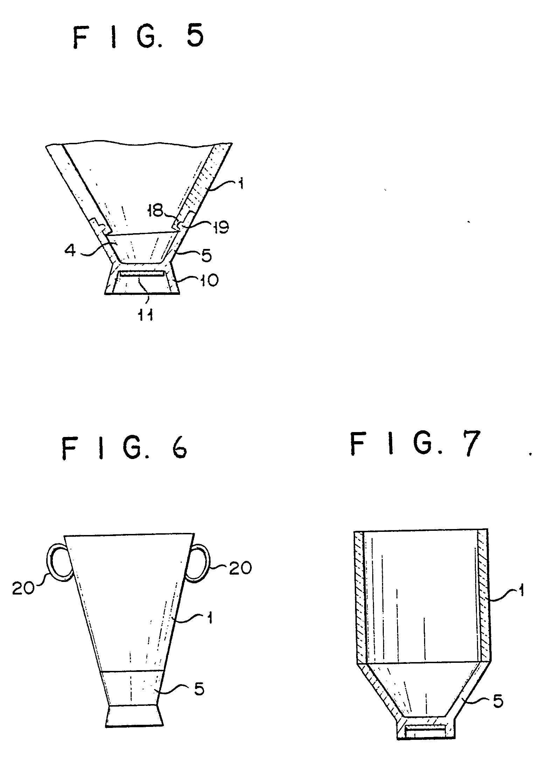

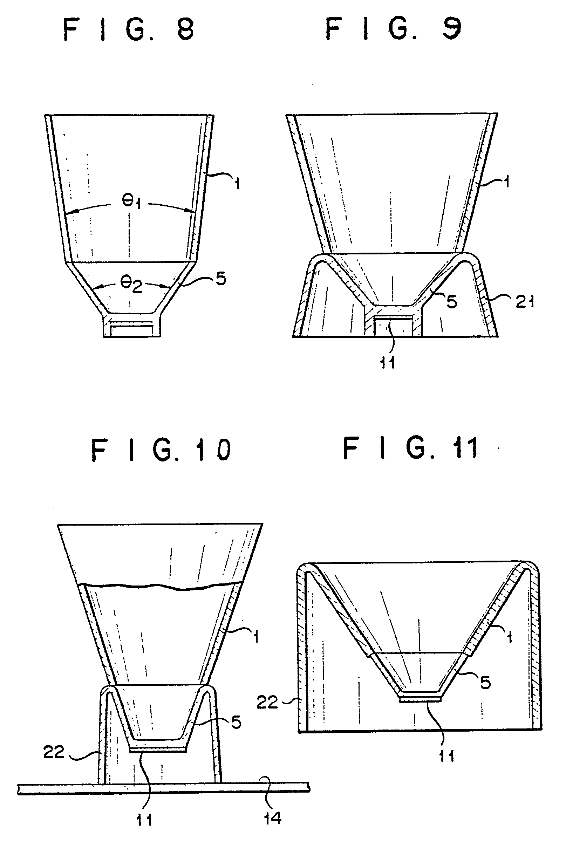

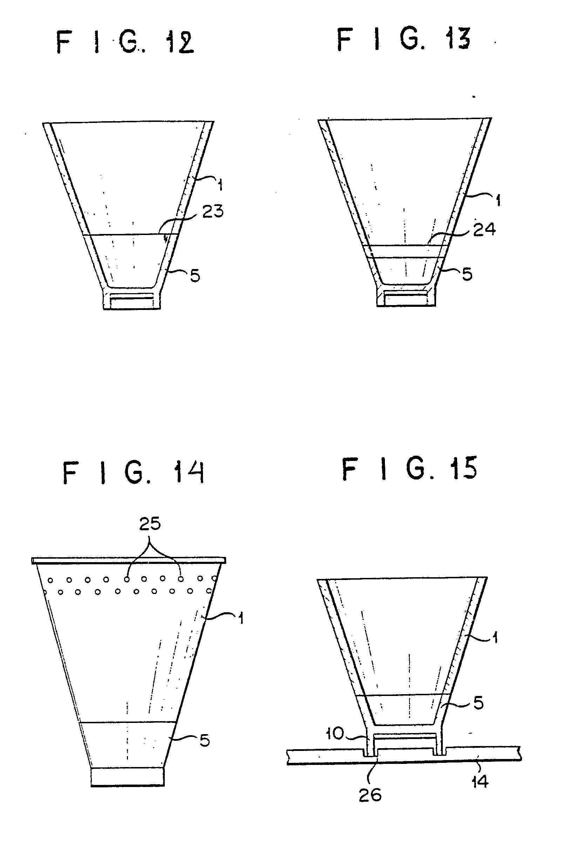

The cooking vessel of this invention is not limited to the above-mentioned embodiment, and may alternatively be constructed as follows. In Fig. 4, the vessel body 1 and the heating vessel 5 are provided respectively with an annular fitting projection 16 and an annular fitting recess 17 which are forcibly coupled with each other. In Fig. 5, the vessel body 1 and the heating vessel 5 are provided respectively with an annular fitting recess 18 and an annular fitting projection 19 which are also forcibly coupled with each other. In Fig. 6, a pair of ears 20 are formed on the outside of the peripheral wall of the vessel body 1 so that the vessel body 1 may be taken out of the high-frequency heating chamber 13 with ease even though it is heated. In this case, the ears 20 may be formed of any materials which absorb little high-frequency, such as polypropylene, polyethylene, Teflon (Regd, Trade Mark), silicon, polysulfone, and combinations of these materials. In Fig. 7, the vessel body 1 in the shape of a cylinder and the heating vessel 5 in the shape of an inverted truncated cone are joined together. In Fig. 8, a taper angle $\theta_1$ of the peripheral wall of the vessel body 1 is smaller than a taper angle $\theta_2$ of the peripheral wall of the heating vessel 5 so that kernels of corn may collect in the heating vessel 5. In Fig. 9, a fence 21 surrounding the heating vessel 5 is solidly formed thereon so as to be settled on the platform 14, improving the setting stability of the vessel. In Fig. 10, the high-frequency absorbing material 11 of the heating vessel 5 is kept 5 mm or more apart from the platform 14 by a fence 22, so that the heat of the heating vessel 5 may hardly be conducted to the platform 14. Thus, the platform 14 is protected against deterioration and breakage. In Fig. 11, a fence 22 surrounding the vessel body 1 is solidly formed thereon so that operator's fingers may be kept from touching the heating vessel 5. In Fig. 12, the vessel body 1 and the heating vessel 5 are formed of transparent and opaque materials, respectively, to provide an index 23 on the boundary therebetween so that the quantity of the kernels of corn $a$ in the vessel may be measured. In Fig. 13, an index 24 for the measurement of the quantity of the kernels $a$ in the vessel is marked on the outside of the peripheral wall of the vessel body 1. In Fig. 13, moreover, an index for indicating the quantity of edible oil may additionally be marked. In Fig. 14, a number of perforations 25 are bored in the upper portion of the peripheral wall of the vessel body 1 so that moisture may escape from the vessel through them. Alternatively, the perforations 25 may be bored in the cover 6. In Fig. 15, a fitting recess 26 to engage the support seat 10 is formed in the platform 14 for the prevention of the vessel's fall.

In the cooking vessel for microwave oven according to this invention, as described above, the vessel body is formed of a high frequency transmitting material and the heating vessel is fitted with the high-frequency absorbing member, so that kernels of corn in the vessel is heated by direct high-frequency dielectric heating and heat generated from the high-frequency absorbing member. Thus, satisfactory heating may be achieved in a short time. Furthermore, the heating will hardly be affected by the high-frequency intensity distribution of the microwave oven used or the location of the vessel.

## Claims

1. Microwave cooking apparatus comprising an open top cooking vessel having a flat bottom wall portion and a side wall portion extending upwardly and outwardly from said flat bottom wall portion and a microwave absorbing heating element 11 which is attached to the flat bottom wall portion at its outside, the vessel including a microwave transmissible portion characterized in that the cooking vessel comprises a vessel body (1) and a heating vessel (5), said vessel body (1) constituting said microwave transmissible portion which is formed of a plastics material and having a peripheral wall, a bottom opening (3), an inlet opening (2) defining said open top, said heating vessel (5) having said side wall, said bottom wall, and a top opening, said side wall and said bottom wall defining a heating chamber (4) within the heating vessel (5), wherein said vessel body (1) and said heating vessel (5) are detachably coupled to one another so that the heating chamber (4) communicates with the vessel body (1) through the bottom opening (3) and top opening.

2. Microwave cooking apparatus according to claim 1, characterized in that first and second fitting sections are respectively provided on the heating vessel and the vessel body.

3. Microwave cooking apparatus according to claim 2 wherein said fitting sections are mating threads (7, 8) formed respectively on said vessel body (1) and said heating vessel (5).

4. Microwave cooking apparatus according to claim 1, characterized in that said first and second fitting sections are an annular recess (17) and an annular projection (16) respectively formed on said vessel body (1) and said heating vessel (5) and capable of engaging each other.

5. Microwave cooking apparatus according to any one of claims 1 to 4, characterized in that said vessel body (1) has an ear (20) formed of a heat insulating material.

6. Microwave cooking apparatus according to any one of claims 1 to 5, characterized in that the heating chamber (4) has a circular section reducing downwardly in diameter.

7. Microwave cooking apparatus according to any one of claims 1 to 6, characterized in that said heating vessel (5) has an annular member (10, 22) protruding from the outside of the bottom thereof so as to surround said microwave absorbing heating element (4).

8. Microwave cooking apparatus according to any one of claims 1 to 7, characterized in that said vessel body (1) has an index (23, 24) for the measurement of the quantity of kernels of corn contained therein.

## Patentansprüche

1. Microwellen-Kochvorrichtung mit einem eine ober Öffnung aufweisenden Kochgefäß mit einem flachen Bodenwandteil und einem Seitenwandteil, der sich von dem flachen Bodenwandteil nach oben und außen erstreckt, und mit einem Mikrowellen-Absorptionsheizelement (11), das am flachen Bodenwandteil an dessen Außenseite angebracht ist, wobei das Gefäß eine für Mikrowellen durchlässigen Teil hat, dadurch gekennzeichnet, daß das Kochgefäß einen Gefäßkörper (1) und eine Heizgefäß (5) aufweist, daß der Gefäßkörper (1) den für Mikrowellen durchlässigen Teil bildet, der aus einem Kunststoff hergestellt ist, und eine Mantelwand, eine Bodenöffnung (3) eine die obere Öffnung des Kochgefäßes bildende Einlaßöffnung (2) aufweist, daß das Heizgefäß (5) die Seitenwand, die Bodenwand und eine obere Öffnung aufweist, wobei die Seitenwand und die Bodenwand eine Heizkammer (4) innerhalb des Heizgefäßes (5) bilden, und daß der Gefäßkörper (1) und das Heizgefäß (5) lösbar miteinander gekoppelt sind, so daß die Heizkammer (4) mit dem Gefäßkörper (1) über die Bodenöffnung (3) und eine obere Öffnung in Verbindung steht.

2. Mikrowellen-Kochvorrichtung nach Anspruch 1, dadurch gekennzeichnet, daß erste und zweite Paßstücke jeweils auf dem Heizgefäß und dem Gefäßkorper vorgesehen sind.

3. Mikrowellen-Kochvorrichtung nach, Anspruch 2, dadurch gekennzeichnet, daß die Paßstück ineinander greifende Gewinde (7, 8) sind, die jeweils auf dem Gefäßkörper (1) und dem Heizgefäß (5) ausgeführt sind.

4. Microwellen-Kochvorrichtung nach Anspruch 1, dadurch gekennzeichnet, daß die ersten und zweiten Paßstücke eine ringförmige Aussparung (17) und ein ringförmiger Vorsprung (16) sind, die jeweils auf den Gefäßkorper (1) und dem Heizgefäß (5) ausgeführt sind und ineinander zu greifen vermögen.

5. Mikrowellen-Kochvorrichtung nach einem der Ansprüche 1 bis 4, dadurch gekennzeichnet, daß der Gefäßkörper (1) eine Öse (20) aus einem wärmeisolierendem Material hat.

6. Mikrowellen-Kochvorrichtung nach einem der Ansprüche 1 bis 5, dadurch gekennzeichnet, daß die Heizkammer (4) einen sich nach unten im Durchmesser vermindernden kreisförmigen Abschnitt hat.

7. Mikrowellen-Kochvorrichtung nach einem der Ansprüche 1 bis 6, dadurch gekennzeichnet, daß das Heizgefäß (5) eine ringförmiges Glied (10, 22) hat, das so von der Außerseite des Bodens vorsteht, daß es das Microwellen Absorbtionsheizelement (11) umgibt.

8. Mikrowellen-Kochvorrichtung nach einem der Ansprüche 1 bis 7, dadurch gekennzeichnet, daß der Gefäßkorper (1) einen Anzeiger bzw. eine Markierung (23, 24) für die Messung der darin enthaltenen Menge an Getreidekörnern aufweist.

**Revendications**

1. Appareil de cuisson par micro-ondes constitué par un récipient de cuisson ouvert en haut, possédant un fond plat et une paroi latérale s'étendant vers la haut et vers l'extérieur à partir du fond plat, de même qu'un élément chauffant (11) absorbant les micro-ondes, qui est fixé sur la côté extérieur du fond plat, le récipient comprenant une partie transmettant les micro-ondes, caractérisé en ce que le récipient de cuisson comporte un corps de récipient (1) et une coupelle chauffante (5), le corps (1) constituant la partie transmettant les micro-ondes et étant formé d'une matière plastique, ce corps présentant une paroi latérale périphérique, une ouverture (3) en bas et un ouverture d'entrée (2) définissant le dessus ouvert, la coupelle chauffante (5) présentant une paroi latérale, le fond plat et une ouverture en haut, la paroi latérale et le fond de la coupelle définissant un espace de chauffage (4) à l'intérieur de la coupelle chauffante (5), le corps de récipient (1) et la coupelle chauffante (5) étant assemblés, de façon détachable, de manière que l'espace de chauffage (4) communique avec l'intérieur du corps de récipient (1) à travers l'ouverture (3) en bas du corps de récipient et l'ouverture en haut de la coupelle chauffante (5).

2. Appareil selon la revendication 1, caractérisé en ce qu'une première et un seconde portion d'assemblage sont prévues, l'une sur la coupelle chauffante, l'autre sur le corps de récipient (1).

3. Appareil selon la revendication 2, caractérisé en ce que les portions d'assemblage sont des filetages complémentaires (7, 8) formés sur la corps de récipient (1) et sur la coupelle chauffante (5).

4. Appareil selon la revendication 1, caractérisé en ce que la première et la seconde portion d'assemblage sont une rainure annulaire (17) et un bourrelet annulaire (16) formés sur le corps de récipient (1) et sur la coupelle chauffante (5) et capables de s'emboîter l'un dans l'autre.

5. Appareil selon l'une quelconque des revendications 1 à 4, caractérise en ce que le corps de récipient (1) possède une anse (20) en un matériau thermiquement isolant.

6. Appareil selon l'une quelconque des revendications 1 à 5, caractérisé en ce que l'espace de chauffage (4) possède une section circulaire dont le diamètre diminue vers le bas.

7. Appareil selon l'un quelconque des revendications 1 à 6, caractérisé en ce que la coupelle chauffante (5) possède un élément annulaire (10, 22) qui fait saillie vers l'extérieur par rapport au fond de la coupelle et qui entoure l'élément chauffant (11) absorbant les micro-ondes.

8. Appareil selon l'une quelconque des revendications 1 à 7, caractérisé en ce que le corps de récipient (1) porte un repère (23, 24) pour mesurer la quantité de grains de maïs contenus à l'intérieur.

# F I G. 1

# F I G. 2

# F I G. 3

# F I G. 4

# F I G. 5

# F I G. 6

# F I G. 7

# F I G. 8

# F I G. 9

# F I G. 10

# F I G. 11

F I G. 12

F I G. 13

F I G. 14

F I G. 15